# EUROPÄISCHE PATENTSCHRIFT

(11) **EP 2 122 217 B1**
(45) Veröffentlichungstag und Bekanntmachung des Hinweises auf die Patenterteilung: **24.10.2012**
(21) Anmeldenummer: 08701528.5
(22) Anmeldetag: 16.01.2008
(51) Int. Cl.: F16K 1/12, F16K 15/00, F16K 17/00, F16K 47/04, F16K 47/08

(54) **VENTILKÖRPER FÜR EINE FLUIDREGELEINRICHTUNG**
VALVE BODY FOR A FLUID CONTROL DEVICE
CORPS DE SOUPAPE POUR DISPOSITIF DE RÉGULATION DE FLUIDES

(30) Priorität: 20.02.2007 DE 202007002608 U
(43) Veröffentlichungstag der Anmeldung: 25.11.2009
(73) Patentinhaber: Mann + Hummel GmbH, 71638 Ludwigsburg (DE)
(72) Erfinder: LAMPERT, Johannes, 82237 Wörthsee (DE); EBERLE, Jürgen, 72076 Tübingen (DE); ZHU, Yihao, 71640 Ludwigsburg (DE); HÜPPCHEN, Claudia, 70190 Stuttgart (DE); BEHLING, Gerd, 71384 Weinstadt (DE)
(86) Internationale Anmeldenummer: PCT/EP2008/050463
(87) Internationale Veröffentlichungsnummer: WO 2008/101753

(56) Entgegenhaltungen:
- WO-A-03/087638
- DE-A1- 2 648 540
- DE-A1- 4 320 826
- DE-A1- 10 253 769
- DE-A1-102004 030 421
- JP-A- 2006 266 666
- US-A- 4 176 683

## Beschreibung

### Stand der Technik

Die Erfindung betrifft einen Ventilkörper für ein Ventil in einer Fluidregeleinrichtung, beispielsweise für eine Anordnung zur Steuerung von Flüssigkeitsströmen in einer Filteranordnungen für Öl oder Kraftstoff einer Brennkraftmaschine oder eines Getriebes für ein Kraftfahrzeug oder für vergleichbare Anwendungen, die eine wirkungsvolle Regelung eines Fluidstroms erfordern, nach dem Oberbegriff des Anspruchs 1.

Es ist beispielsweise aus der DE 196 05 425 C2 ein Flüssigkeitsfilter für einen Verbrennungsmotor bekannt, bei dem ein Filterumgehungsventilkörper mit einer runden oder kugelausschnittsförmigen Dichtfläche versehen ist, die mit einer korrespondierenden Dichtfläche des Filtergehäuses zusammenwirkt.

Bei diesen Filtern besteht oft das Problem, das der Ventilkörper die Strömung der zu steuernden Flüssigkeit so beeinflusst, dass störende Ventilgeräusche in der Öffnungsphase und insbesondere auch kurz vor und nach der Auflage des Ventilkörpers am Ventilsitz eine akustische Beeinträchtigung verursachen, die zum Beispiel beim Betrieb in einem Kraftfahrzeug nicht erwünscht sind.

Aus der DE 196 47 424 A1 ist zu entnehmen, dass ein Ventilkörper für eine Fluidregeleinrichtung so gestaltet werden kann, dass im Strömungsverlauf hinter dem Ventilsitz ein konvergierender Bereich, eine Verengung und ein divergierender Bereich angeordnet sind. Insbesondere der divergierende Bereich ist hier mit einem bestimmten Diffusorwinkel und einer entsprechenden Länge derart versehen, dass das durch die Strömung des Fluids im Ventil erzeugte Geräusch verringerbar ist.

Ein gattungsgemäßer Ventilkörper ist z.B. aus der DE 43 20 826 A1 bekannt, welcher mit wendelförmigen Rippen bzw. Nuten versehen ist. Innerhalb der Nuten sind Öffnungen vorgesehen, durch welche durch die Nuten gebildete Kanäle mit dem Innenraum des Ventilkörpers kommunizieren können.

Das Weiteren ist aus der DE 10 2004 030 421 A1 eine Ventilvorrichtung bekannt geworden, welche ein Ventilelement aufweist, das mit einem Ventilsitz dichtend zusammenwirken kann. Das Ventilelement ist außenumfänglich mit konkaven Aussparungen versehen, welche jeweils von zwei Führungsabschnitten begrenzt sind. Außerdem weist das Ventilelement in einer Variante einen Öffnungen bildenden Querbohrungsbereich auf.

### Darstellung der Erfindung

Die Erfindung geht aus von einem Ventilkörper für die Steuerung von Fluidströmen mit einem Führungskörper für das vom Ventilsitz strömende Fluid, der derartig ausgebildet ist, dass das Fluid mittels sich im Wesentlichen in Strömungsrichtung erstreckenden Führungsstege am Führungskörper vorbeileitbar ist, wobei, um insbesondere auch eine Querströmung durch den Ventilkörper zu ermöglichen, der Ventilkörper im Bereich des vorbeiströmenden Fluids Öffnungen aufweist, die eine Fluidströmung in das Innere und aus dem Inneren des Führungskörpers heraus ermöglichen. Erfindungsgemäß sind noch Führungsstege angeordnet, die radial umlaufend im Führungskörper angeordnet sind und zwar auch in fester Verbindung mit den axial verlaufenden Führungsstegen, so dass zwischen denen die Öffnungen gebildet sind.

Besonders vorteilhaft sind solche Führungsstege ausgebildet, wenn sie in Strömungsrichtung vom Ventilsitz, der beispielsweise ein kugel- oder kugelausschnittsförmige oder eine kegelige oder eine andere einen Dichtsitz gewährleistende Kontur aufweist, axial nach hinten geführt sind und zwar in einer dem Anwendungsfall und der Konsistenz des Fluids angepassten Anzahl und Ausbildung.

Es ist hierbei auch möglich, dass die Führungsstege zur Beeinflussung der Strömungsrichtung des Fluids spiralig verlaufen. Weiterhin können die Führungsstege zur Beeinflussung der Strömungsrichtung des Fluids Nasen oder radial Ringe aufweisen oder eine in Strömungsrichtung des Fluids veränderliche Breite aufweisen, d.h. keilförmig ausgebildet sein.

Der erfindungsgemäße Ventilkörper und/oder die Führungsstege können aus Metall oder Kunststoff oder aus deren Kombination aufgebaut werden, wobei zum Beispiel eine Stahlkugel am Ventilsitz und ein dahinter angeordneter Kunststoffkörper vorgesehen werden können.

Die zuvor bezeichneten Führungsstege, ihre Länge, Breite, Anzahl und ihre Abstände zueinander sind vorteilhaft so angeordnet, dass sich im Strömungsverlauf des Fluids, vorzugsweise einer Flüssigkeit, eine optimale Geräuschdämmung des vorbeiströmenden Fluids ergibt.

Zusammenfassend dargestellt kann mit der Erfindung eine Integration der vorteilhaften zum Beispiel kugelförmigen Dichtform des Ventilsitzes mit den vor allem seitlichen Führungsstegen zur Optimierung der Akustik vorgenommen werden, wobei eine seitliche Umströmung des Ventilkörpers und auch eine seitliche Durchströmung des Führungskörpers zur Verbesserung der akustischen Eigenschaften erreicht werden kann.

Die mit der vorteilhaften Dichtform erreichten Vorzüge hinsichtlich einer langen und klemmfreien Auflage des Ventilkörper und einem definierten Öffnungspunkt können so auf einfache Weise mit einer harmonischen Öffnungskurve hinsichtlich der Akustik kombiniert werden, da Schwingungen des Ventilkörpers erfindungsgemäß weitgehend vermieden sind.

Bevorzugt kann der erfindungsgemäße Ventilkörper als Bestandteil eines Getriebeölfilters für ein Kraftfahrzeug verwendet werden.

### Kurze Beschreibung der Abbildungen der Zeichnungen

Die Erfindung wird anhand eines Ausführungsbeispiels in den Zeichnungen erläutert. Es zeigen:
- Figur 1: eine Ansicht eines erfindungsgemäßen Ventilkörpers für einen Getriebeölfilter mit einem akustisch optimierten Führungskörper für das Getriebeöl und
- Figur 2: einen Querschnitt durch den Ventilkörper nach der Figur 1.

### Weg(e) zur Ausführung der Erfindung

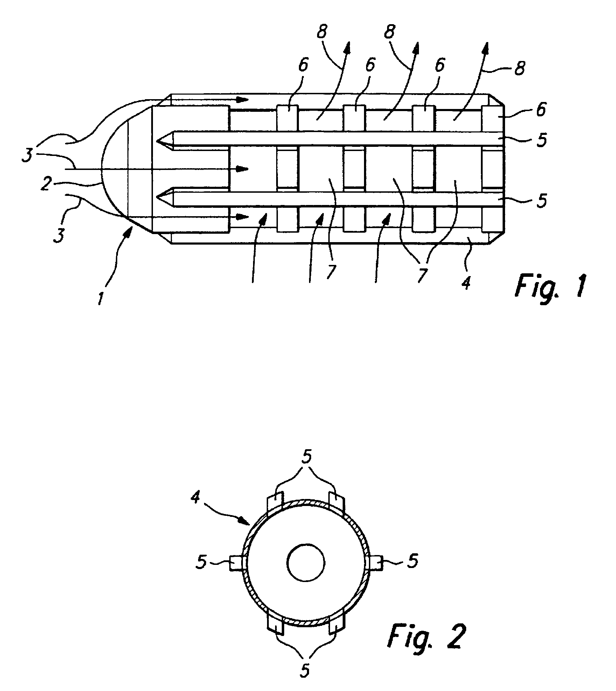

In Figur 1 ist ein Ventilkörper 1 dargestellt, der über eine kugelausschnittsförmige Dichtfläche bzw. Dichtkontur 2 an einer hier nicht näher dargestellten korrespondierenden Dichtfläche eines Ventils, beispielsweise in einem Getriebeölfilter in einem Kraftfahrzeug, zur Bildung eines Dichtsitzes angelegt werden kann. Wenn die Dichtfläche 2 in axialer Richtung vom Dichtsitz abgehoben wird so ergeben sich Strömungsverläufe 3 des Fluids, hier eines Getriebeöls, an der Dichtfläche 2 vorbei in einen Führungskörper 4, der mit der Dichtfläche 2 verbunden ist.

Der Führungskörper 4 weist axiale Führungsstege 5 auf und ist weiterhin mit radial umlaufenden Führungsstegen 6 versehen, die somit Öffnungen 7 für die Ein- und/oder Ausströmungen des Fluids gemäß der Strömungsverläufe 3 oder von austretenden Strömungsverläufen 8 bilden.

Aus Figur 2 sind noch in einem Querschnitt die Anordnungen insbesondere der axialen Führungsstege 5 zu entnehmen.

Der Strömungsverlauf 3 und 8 ist hinsichtlich der Geräuschoptimierung des strömenden Fluids, hier das Getriebeöl, durch die Öffnungen 7 so optimiert, dass die akustischen Verhältnisse durch die Anzahl und die Abstände der Führungsstege 5 und 6 positiv beeinflusst werden können.

## Patentansprüche

1. Ventilkörper für eine Fluidregeleinrichtung zur Beeinflussung von Fluidströmen mit einem Führungskörper (4) für das vom Ventilsitz strömende Fluid, der derartig ausgebildet ist, dass das Fluid mittels sich im Wesentlichen in Strömungsrichtung erstreckenden, axialen Führungsstegen (5) am Führungskörper (4) vorbeileitbar ist, wobei der Ventilkörper im Bereich des vorbeiströmenden Fluids Öffnungen (7) aufweist, die eine Fluidströmung in das Innere und aus dem Inneren des Führungskörpers (4) heraus ermöglichen, **dadurch gekennzeichnet, dass** weitere Führungsstege (6) vorhanden sind, die in vorgegebenen Abständen radial umlaufend im Führungskörper (4) bzw. an den axialen Führungsstegen (5) angeordnet sind und zwischen denen die Öffnungen (7) gebildet sind.

2. Ventilkörper nach Anspruch 1, **dadurch gekennzeichnet, dass** der Ventilkörper (1) eine kugelausschnittsförmige Dichtfläche (2) aufweist.

3. Ventilkörper nach einem der vorhergehenden Ansprüche, **dadurch gekennzeichnet, dass** die Führungsstege (5, 6) zur Beeinflussung der Strömungsrichtung des Fluids spiralig verlaufen.

4. Ventilkörper nach einem der vorhergehenden Ansprüche, **dadurch gekennzeichnet, dass** die Führungsstege (5, 6) zur Beeinflussung der Strömungsrichtung des Fluids Nasen oder radiale Ringe aufweisen.

5. Ventilkörper nach einem der vorhergehenden Ansprüche, **dadurch gekennzeichnet, dass** die Führungsstege (5, 6) zur Beeinflussung der Strömungsrichtung keilförmig ausgebildet sind.

6. Ventilkörper nach einem der vorhergehenden Ansprüche, **dadurch gekennzeichnet, dass** der Ventilkörper (1) und/oder die Führungsstege (5, 6) aus Metall oder Kunststoff oder aus deren Kombination aufgebaut sind.

7. Verwendung des Ventilkörpers nach einem der vorhergehenden Ansprüche als Ventilkörper für eine Flüssigkeitsregeleinrichtung zur Beeinflussung von Flüssigkeitsströmen.

8. Verwendung eines Ventilkörpers nach einem der vorhergehenden Ansprüche als Bestandteil eines Getriebeölfilters für ein Kraftfahrzeug.

## Claims

1. Valve body for a fluid regulating apparatus for influencing fluid flows with a guiding element (4) for the fluid flowing from the valve seat which is designed in such a way that the fluid can bypass the guiding element (4) by means of axial guiding ribs (5) extending substantially in flow direction, the valve body featuring openings (7) in the area of the bypassing fluid which enable a fluid to flow into the interior and to leave the interior of the guiding element (4), **characterized in that** further guiding ribs (6) are provided which are disposed in predefined spacings radially revolving in the guiding element (4) and at the axial guiding ribs (5), respectively, and between which the openings (7) are formed.

2. Valve body according to claim1, **characterized in that** the valve body (1) features **a** sealing surface (2) designed as spherical sector.

3. Valve body according to one of the above claims, **characterized in that** the guiding ribs (5, 6) are arranged spirally for influencing the flow direction of the fluid.

4. Valve body according to one of the above claims, **characterized in that** the guiding ribs (5, 6) features lugs or radial rings for influencing the flow direction of the fluid.

5. Valve body according to one of the above claims, **characterized in that** the guiding ribs (5, 6) are wedge-shaped for influencing the flow direction of the fluid.

6. Valve body according to one of the above claims, **characterized in that** the valve body (1) and/or the guiding ribs (5, 6) are made of metal or synthetic material or of a combination of both.

7. Utilization of the valve body according to one of the above claims as valve body for a liquid regulating apparatus for influencing liquid flows.

8. Utilization of the valve body according to one of the above claims as part of a transmission oil filter for a motor vehicle.

## Revendications

1. Corps de soupape pour un dispositif de régulation de fluide destiné à influencer les flux de fluides avec un élément de guidage (4) pour le fluide coulant du siège de soupape, exécuté de telle manière que le fluide puisse être guidé, au moyen de nervures de guidage (5) axiales s'étendant essentiellement dans le sens du flux, le long de l'élément de guidage (4), le corps de soupape présentant dans la zone du flux de fluide des ouvertures (7) grâce auxquelles le fluide peut entrer dans et sortir de la partie intérieure de l'élément de guidage (4), **caractérisé en ce que** d'autres nervures de guidage (6) sont présentes et disposées, à des distances prédéfinies, en sens radial autour de l'élément de guidage (4) et/ou sur les nervures de guidage axiales (5), et que les ouvertures (7) sont formées entre **ces** nervures.

2. Corps de soupape selon la revendication 1, **caractérisé en ce que** le corps de soupape (1) est doté d'une surface d'étanchéité (2) en forme de secteur sphérique.

3. Corps de soupape selon l'une des revendications précédentes, **caractérisé en ce que** les nervures de guidage (5, 6) s'étendent en forme de spirale afin d'influencer le sens de flux du fluide.

4. Corps de soupape selon l'une des revendications précédentes, **caractérisé en ce que** les nervures de guidage (5, 6) présentent des ergots ou des anneaux radiaux afin d'influencer le sens de flux du fluide.

5. Corps de soupape selon l'une des revendications précédentes, **caractérisé en ce que** les nervures de guidage (5, 6) sont réalisées en forme de cale afin d'influencer le sens de flux.

6. Corps de soupape selon l'une des revendications précédentes, **caractérisé en ce que** le corps de soupape (1) et/ou les nervures de guidage (5, 6) sont constitués de métal ou de matière plastique ou d'une combinaison de ces deux matériaux.

7. Utilisation du corps de soupape selon l'une des revendications précédentes en tant que corps de soupape pour un dispositif de régulation de fluide destiné à influencer des flux de fluides.

8. Utilisation d'un corps de soupape selon l'une des revendications précédentes en tant que composant d'un filtre à huile à engrenages pour un véhicule automobile.
